# EUROPEAN PATENT SPECIFICATION

(11) **EP 1 525 961 B1**
(45) Date of publication and mention of the grant of the patent: **19.12.2007**
(21) Application number: 04256348.6
(22) Date of filing: 14.10.2004
(51) Int. Cl.: B26D 7/08, A23C 19/06, A01J 25/12, A22C 25/18, A22C 17/00, A22B 5/00, B26D 1/04

(54) **Ultrasonic slitter**
Ultraschallschneider
Dispositif pour couper a l'aide des ultrasons

(30) Priority: 20.10.2003 US 689161
(43) Date of publication of application: 27.04.2005
(73) Proprietor: KRAFT FOODS HOLDINGS, INC., Northfield, Illinois 60093 (US)
(72) Inventor: Mosiewicz, Krzysztof, Chicago Illinois 60613 (US); Arora, Vijay K., Lake Forest Illinois 60045 (US)
(74) Representative: Smaggasgale, Gillian Helen

(56) References cited:
- EP-A- 0 202 676
- EP-A- 0 324 199
- EP-A- 0 528 097
- EP-A- 0 956 929
- EP-A- 1 010 500
- DE-A- 19 614 125
- DE-U- 29 802 711
- US-A- 3 817 141
- PATENT ABSTRACTS OF JAPAN vol. 2002, no. 05, 3 May 2002 (2002-05-03) & JP 2002 028885 A (SUMITOMO RUBBER IND LTD), 29 January 2002 (2002-01-29)
- PILKINGTON D J ED - COMITATO NAZIONALE PER LA RICERCA O PER LO SVILUPPO DELL'ENERGIA NUCLEARE E DELLE ENERGIE ALTERNATIVE (ENEA): "THE USE OF ULTRASONIC CUTTING IN THE AUTOMOTIVE INDUSTRY" 20 May 1991 (1991-05-20), PROCEEDINGS OF THE INTERNATIONAL SYMPOSIUM ON AUTOMOTIVE TECHNOLOGY AND AUTOMATION (ISATA). FLORENCE, MAY 20 - 24, 1991, CROYDON, AUTOMOTIVE AUTOMATION, GB, PAGE(S) 467-470 , XP000308644 * the whole document *

## Description

### FIELD OF THE INVENTION

The invention relates to apparatus for cutting food products such as cheese products, and specifically to an ultrasonic slitter.

### BACKGROUND OF THE INVENTION

U.S. Patent No. 6,403,138, describes use of a particular type of ultrasonic cutting apparatus in connection with making retail-sized cheese chunks in a continuous process. Various other types of cutting apparatus are used in other high-speed, high-volume commercial food production operations for automated cutting of cheese products and other food products from large chunks, slabs and the like into smaller portions.

EP1010500 provides an apparatus for cutting cheese blocks into portions in which cheese is conveyed along a linear processing path. Longitudinal cutters for dividing the depth and width of the cheese block, with separation of layers when the depth is divided, create sets of longitudinal sticks conveyed side-by-side. These are presented to a guillotine cutter which, on the basis of measured length and weight of the set, makes successive transverse cuts dividing the stick set into successive sets of portions which are then separated from one another for packaging. A control processor uses measured block weight and dimensional information to determine an optimal disposition of cuts taking account of product standard criteria (e.g. maximum permissible deviation from and maintenance of an average portion weight) together with minimized wastage. A refinement takes into account weight and/or dimensional data from other blocks in order to further reduce wastage by allowing one block's deviation from the norm to compensate for another block's deviation.

In certain high speed commercial operations for manufacturing, packaging, and otherwise processing food products, ultrasonic cutting apparatus may be preferable to conventional blades for a number of reasons. Ultrasonic blades may provide a superior quality of cut by avoiding adherence of food products such as nougat or icing, and may also be capable of cutting at higher speeds through products such as cheese.

The use of ultrasonic blades is not limited to food applications. In JP2002-028885, ultrasonic cutting blades are employed in the cutting of unvulcanised rubber.

The prior art includes ultrasonic cutters known as a guillotines which are used to make transverse cuts in food products on conveyors. The guillotine blade is cantilevered over the conveyor and driven downward into a product supported on a conveyor, and is then raised to permit the product to advance past the blade and position the product for the next transverse cut. The prior art also includes stationary ultrasonic slitters used to make longitudinal cuts as the product is advanced on the conveyor. Combinations of vertically reciprocating guillotines and stationary slitters have been used in the past to divide large moving sheets of food product into smaller rectangular portions.

The weight of the guillotine and associated transducer and amplifier results in practical limitations on the length of the guillotine blade and the speed at which the blade can be reciprocated. In one particular application, the maximum blade length is less than 35.6 cm (14 inches), with the optimal length being 17.8 cm (7 inches) or less, and the linear velocity of the guillotine's reciprocation is limited to approximately 45.7 cm (18 inches) per second. Increasing the linear velocity beyond 45.7 cm (18 in.) per second results in excessive mechanical vibration. This produces poor cutting results, and creates stress which may damage system components. In this particular application, it has been found that the guillotine is able to provide at most approximately 75-85 cuts per minute, and only 65 quality cuts per minute.

### SUMMARY

The invention provides an improved ultrasonic cutting device for high speed cutting of food products. More specifically, a first aspect of the present invention provides an ultrasonic cutting apparatus comprising:
a conveyor assembly for supporting a food product and for transporting the food product in a forward direction, said conveyor assembly having first and second conveyors arranged in series with a gap therebetween;
a blade having first and second downwardly convergent cutting edges on opposite ends thereof;
means for oscillating said blade ultrasonically; and
a reciprocating head supporting said blade, said reciprocating head being rectilinearly and transversely movable to effect formation of cuts in said food product by said first cutting edge when moving in a first transverse direction, and by said second cutting edge when moving in a second transverse direction, said reciprocating head positioning said blade in said gap between said first and second conveyors of said conveyor assembly when effecting formation of cuts in said food product.
The head is preferably controlled for automated operation by an electronic controller to reciprocate transversely at a selected speed and a selected frequency within predetermined ranges over food product advancing on the conveyor. The first cutting edge cuts the food product when the head translates in a first direction, and the second cutting edge cuts food product during the return stroke. The blade preferably oscillates ultrasonically, and preferably at a frequency of approximately 20,000 Hz.

The first and second cutting edges are downwardly convergent. They preferably define an included angle greater than 60 degrees and less than 90 degrees. In one particular embodiment, the internal angle is 70 degrees. In another embodiment, the angle is about 60 degrees.

The cutting edges preferably are inclined at identical angles, and preferably intersect a horizontal bottom edge of the blade at identical obtuse angles. The food product preferably has generally vertical sides so that the transverse engagement of the food product by the blade results in initial engagement of an upper corner portion of the food product by the blade, followed by continuously increasing engagement of the food product by the blade as the depth of penetration increases, with the blade moving horizontally and the resultant force on the food product being a vector having a downward component as well as a transverse horizontal component. The blade may have a linear translating velocity of 63.5 to 88.9 cm (25 to 35 inches) per second, and more specifically may have a transverse velocity of approximately 76.2 cm (thirty inches) per second.

According to a second aspect of the present invention there is provided a device for cutting food product comprising:
the ultrasonic cutting apparatus of the above first aspect of the present invention
a frame disposed in a fixed location relative to the conveyor;
a carriage translatably secured to the frame and movable in a direction transverse to the direction of movement of the food product, the carriage including:
   the blade ; and
   the reciprocating head with the blade mounted thereto, the head providing ultrasonic mechanical vibration to the blade, wherein the blade has a first cutting edge and a second cutting edge, the blade translates transversely through the food product and partially in the gap between the first and second conveyors in a first direction thereby making a first cut in the food product with the first cutting edge, and the blade translates transversely through the food product and partially in the gap between the first and second conveyors in a second direction opposite the first direction thereby making a second cut in the food product with the second cutting edge.

The conveyor may include an anvil positioned between the conveyor sections. The food may pass over a bottom portion of the anvil and between side portions of the anvil as the food product is advanced by the conveyor, and the anvil preferably is capable of supporting and constraining the food product against downward displacement and against transverse displacement in either horizontal transverse direction. The anvil may include various elements for engaging the food product such as rotating elements, moving belts or O-rings, or stationary elements. The anvil preferably has a groove or channel in its lower portion having a width slightly greater than that of the blade to permit a lower portion of the blade to pass below a bottom surface of the food product as the food product is being cut. The anvil also preferably has side gaps which have a width greater than the thickness of the blade to permit the blade or portions thereof to pass through laterally beyond the sides of the anvil.

The frame may be secured to a base, and may include one or more rails for guiding lateral translation of the carriage. The carriage may include a slide translatably secured on each rail. The device may include a drive slide to which translating force is provided, and a drive rail to which the drive slide is translatably secured. The head may include a signal generator and an amplifier to provide mechanical oscillation to the blade.

The invention may be used in high-speed, high-volume commercial food production operations for automated cutting of cheese products and other food products from large chunks, slabs and the like into smaller portions, and may also be used in other applications.

### BRIEF DESCRIPTION OF THE DRAWINGS

FIG. 1 is a front elevational view of a bi-directional ultrasonic slitter and a conveyor;
FIG. 2 is a partial side elevational view of the apparatus of Fig. 1;

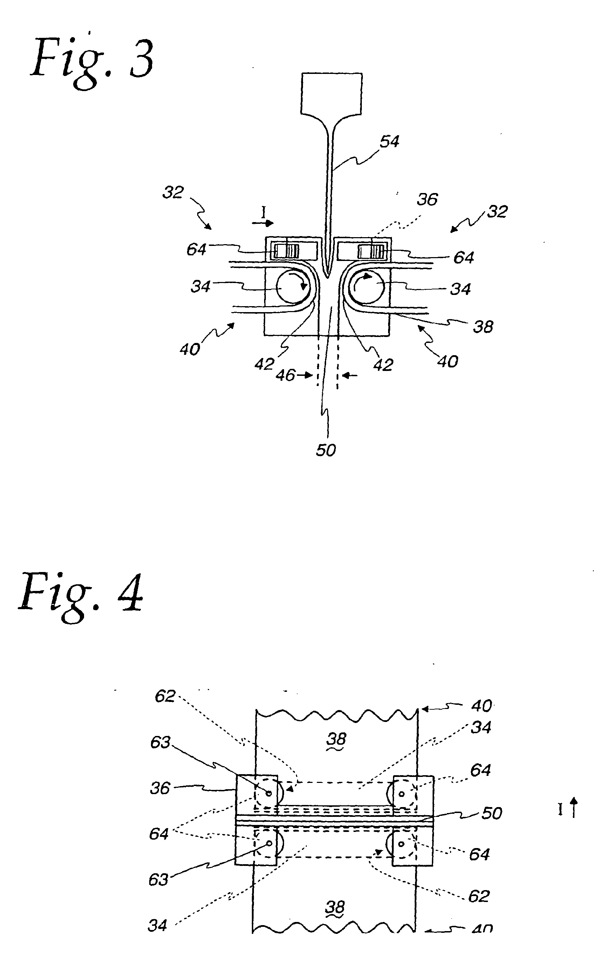

FIG. 3 is another partial side elevational view thereof;
FIG. 4 is a partial plan view thereof;
FIG. 5 is a front elevational view of the blade of the apparatus; and
FIG. 6 is a side elevational view thereof.

### DETAILED DESCRIPTION OF PREFERRED EMBODIMENTS

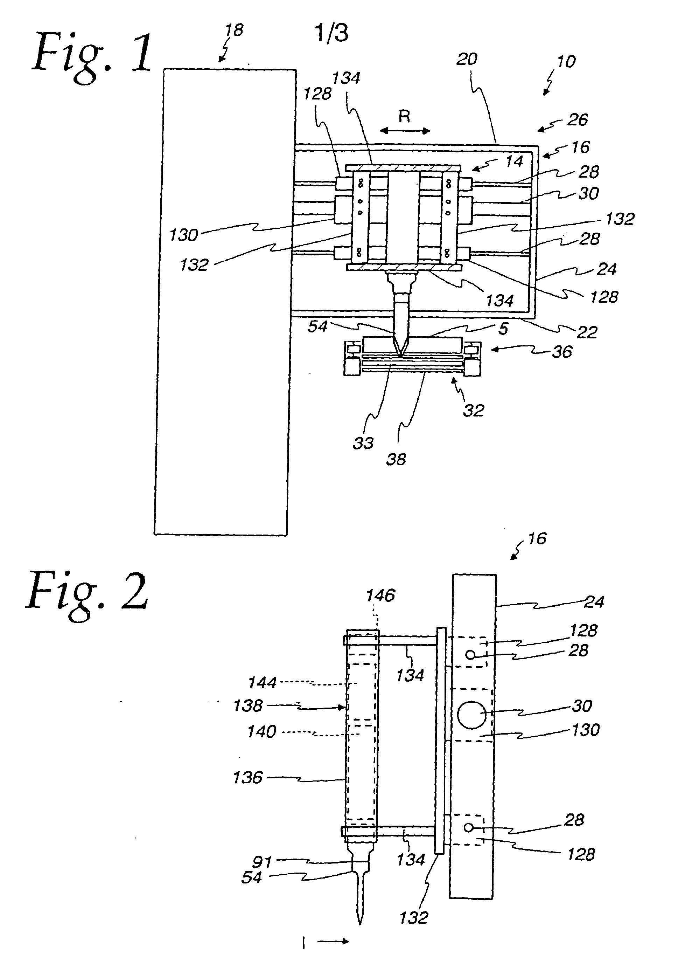

Referring initially to FIG. 1, the invention is preferably embodied in a bidirectional ultrasonic slitter 10 including a translatable carriage 14 supported on a frame 16 on a base 18. As described below, the slitter 10 forms transverse cuts in a food product slab 5 supported on a conveyor assembly 32 that includes an anvil 36 disposed between a pair of conveyors.

The structure of the apparatus may take various different forms. One particular structure is described below and shown in the drawings for purposes of example.

The illustrated base 18 includes operator controls and provides power for translation to the carriage 14. The illustrated frame 16 includes horizontal transverse top and bottom members 20 and 22 supporting a vertical side member 24. Guide rails 28 and drive rail 30 extend horizontally and parallel to one another transversely over the conveyor, supported at opposite ends by the base 18 and side member 24 respectively. The carriage 14 is slidably supported on the frame rails 28 and 30. The carriage 14 may reciprocate in a bi-directional manner as depicted by the arrow R along a path defined by the rails 28 and 30.

The illustrated carriage 14 includes guides 128 slidably mounted on guide rails 28 and a drive slide 130 supported on the drive rail 30. The guides 128 and drive slide 130 are mounted to vertical members 132 which are in turn mounted to horizontal, longitudinally extending upper and lower brackets 134. The brackets 134 support a head 136 including a blade 54 suspended from an oscillator 138 that includes a signal generator 144 and an amplifier 140. The oscillator 138 converts electrical energy supplied through a power coupling 146 into mechanical oscillation of the blade 54 at an ultrasonic frequency of about 20,000 Hz.

The electrical signal generator 144, amplifier 140, and power coupling 146 may be of a type available from Dukane Corporation of St. Charles, Illinois, U.S.A., and RHM Technology, United Kingdom. The power coupling 146 may comprise a power cord and/or one or more connectors.

The illustrated conveyor assembly 32 comprises two or more conveyor sections 40 arranged in series. Each conveyor section may comprise a belt conveyor, O-ring conveyor, or other conveyor. Each of the illustrated conveyor sections includes end rollers 34 and one or more movable members 38 such as belts, bands, O-rings or the like. The food product is carried by the conveyor sections 32 in the direction of arrow I, with end rollers 34 of adjacent conveyor sections rotating in the direction of the arrows depicted thereon. In the illustrated embodiment, a stationary anvil 36 is disposed between the ends 42 of the conveyor sections 40 in a gap 46 supporting and constraining the food product against downward displacement and against transverse displacement in either horizontal transverse direction. The anvil 36 includes a transverse groove or channel 50 through which the blade 54 may pass such that the bottom of the blade 54 extends below the bottom side of a food product being cut.

The illustrated anvil 36 includes side members 62 that constrain the food product against lateral movement as the blade 54 engages the food product 58. The illustrated side members 64 are cylindrical elements freely rotatable about vertical axes 63, providing line contact between the rotating elements 64 and the food product. In other embodiments, the side members may comprise low friction stationary blocks or moving belts-with flat surfaces for low pressure sliding engagement with the food product, or other elements.

As, the food product is moved continuously or intermittently past the anvil 36 by the conveyor 32, the carriage 14 translates in a first direction as shown by arrow R transverse to the direction of motion of the food product on the conveyor 32. The blade 54 translates from one side of the conveyor 32, through the channel 50 of the anvil 36 and through the food product, to the other side of the conveyor 32, thereby dividing the food product. The conveyor 32 continues to move the food product in the direction of arrow I, and the blade 54 translates across the conveyor in a second direction opposite the first direction, again passing through the channel 50 and dividing the food product.

The conveyor 32 may be a step conveyor which advances the food product stepwise past the blade in a series of intermittent movements, each having a longitudinal dimension corresponding to that desired for the portions into which the food product is being divided, with the conveyor pausing as each cut is made by the blade 54..

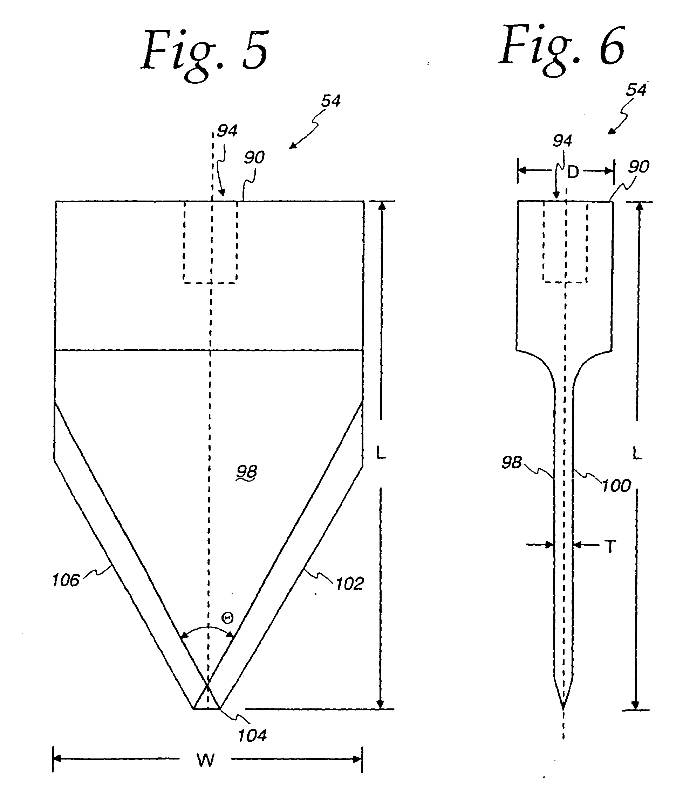

FIGS. 5-6 show a blade 54 in accordance with an embodiment of the invention. The blade 54 is preferably made of aluminum, stainless steel, titanium and/or other metal alloys, and is preferably manufactured to precise tolerances and tuned for ultrasonic oscillation at about 20,000 Hz.

The blade has an upper shank 90 having a thickness or depth D, and a lower cutting portion having reduced thickness or depth relative to the shank. The shank is supported and engaged by the head to permit ultrasonic oscillation across an interface 91 (Fig. 2) and has a socket 94 to receive a mounting screw, stud or other projection extending downward from the head 136. The depth D of the top face 90 is approximately 2.5 cm (1 inch).

The blade 54 includes a front surface 98 and a back surface 100. As the blade 54 passes through food product, the front surface 98 and back surface 100 contact the food product. The amount of friction between the blade 54 and food product correlates to the surface area of the blade 54 that contacts the food product, and accordingly it is generally desirable to reduce the blade surface area contacting the food product. However, decreasing the size of the blade, i.e., decreasing the width W and angle θ defined by the cutting edges, decreases the strength and rigidity of the blade 54, which reduces the precision of the blade's cuts. In the illustrated embodiment, these factors are balanced by orienting the cutting edges 102, 106 at identical inclinations and with an internal angle θ of between 60 and 90 degrees. In one embodiment, the angle θ is between 65 and 75 degrees, or about 70 degrees. The thickness T of the cutting portion of the blade 54 is about 0.3 cm (one-eighth of an inch). The width W of the blade 54 is about 7.62 cm (3 inches), and the overall length L is approximately 13.2 cm (5 3/16 inches). With this configuration, in one example, the blade 54 may be operated at over 45.7 cm (8 in.) per second, and more specifically at over 76.2 cm (30 in.) per second, to make over 100 cuts per minute, and more specifically over 150 cuts per minute, through a slab of natural cheddar cheese having a height of about 6.3 cm (2.5 in.) and a width of about 25.4 cm (10 in.), with the blade clearing the cut at each end of each pass, providing cut surfaces that are smooth, shiny and free of burrs, separating a portion of said slab from the remainder thereof, leaving the knife clean and smear-free, without fines or dust.

While there have been illustrated and described particular embodiments of the present invention, it will be appreciated that the invention is not limited to the embodiments described above.

## Claims

1. Ultrasonic cutting apparatus (10) comprising:
a conveyor assembly (32) for supporting a food product and for transporting the food product in a forward direction; said conveyor assembly having first and second conveyors arranged in series with a gap therebetween;
a blade (54) having first and second downwardly convergent cutting edges (102, 106) on opposite ends thereof;
means (138) for oscillating said blade (54) ultrasonically; and
a reciprocating head (136) supporting said blade, said reciprocating head (136) being rectilinearly and transversely movable to effect formation of cuts in said food product by said first cutting edge (102, 106) when moving in a first transverse direction, and by said second cutting edge (102, 106) when moving in a second transverse direction, said reciprocating head positioning said blade in said gap between said first and second conveyors of said conveyor assembly when effecting formation of cuts in said food product.

2. The apparatus of Claim 1 wherein said conveyor assembly (32) comprises an anvil disposed between said conveyors to constrain and support said food product during formation of transverse cuts, said anvil (36) having a groove (50) through which a portion of said blade (54) travels.

3. The apparatus of Claim 1 or 2 wherein the blade (54) oscillates at a frequency of approximately 20,000 Hz.

4. The apparatus of any one of Claims 1 to 3 wherein the first cutting edge (102, 106) and the second edge (102, 106) intersect to form a tip (104).

5. The apparatus of Claim 4 wherein the tip (104) has a horizontal edge

6. The apparatus of Claim 5 wherein each of the cutting edges (102, 106) is inclined and intersects the horizontal edge of the tip at an obtuse angle.

7. The apparatus of Claim 5 or 6 wherein the angles of intersection between the cutting edges (102, 106) and the horizontal edge of the tip (104) are substantially identical.

8. The apparatus of any one of Claims 1 to 7 wherein the cutting edges (102, 106) define an included angle greater than 60 degrees and less than 90 degrees.

9. The apparatus of Claim 8 wherein said included angle is about 60 degrees.

10. The apparatus of any one of Claims 1 to 9 wherein the blade (54) has a linear translating velocity of at least about 76.2 cm (thirty inches) per second and makes at least about 150 cuts per minute.

11. A device for cutting food product comprising:
the ultrasonic cutting apparatus of Claim 1;
a frame (16) disposed in a fixed location relative to the conveyor (32);
a carriage (14) translatably secured to the frame (16) and movable in a direction transverse to the direction of movement of the food product, the carriage (14) including:
the blade (54); and
the reciprocating head (136) with the blade (54) mounted thereto, the head (136) providing ultrasonic mechanical vibration to the blade (54), wherein the blade has a first cutting edge and a second cutting edge, the blade (54) translates transversely through the food product and partially in the gap between the first and second conveyors in a first direction thereby making a first cut in the food product with the first cutting edge (102, 106) and the blade (54) translates transversely through the food product and partially in the gap between the first and second conveyors in a second direction opposite the first direction thereby making a second cut in the food product with the second cutting edge (102, 106).

12. The device of Claim 11 wherein the conveyor (32) includes conveyor sections (40) separated by a gap, and wherein the device further comprises an anvil (36) joining the conveyor sections (40).

13. The device of Claim 12 wherein food product passes the anvil (36) as the food product is displaced by the conveyor (32), and wherein the anvil (36) includes restraining fixture (62) for constraining movement of the food product in directions other than the input direction.

14. The device of Claim 13 wherein the restraining fixtures (62) are rotating elements (64) with a line contact with the food product.

15. The device of any one of Claims 12 to 14 wherein the anvil (36) includes a channel (50) permitting a lower tip (104) of the blade to pass through the channel (50) and pass below a bottom surface of the food product.

16. The device of any one of Claims 1 to 15 wherein the frame (16) is a substantially rigid cantilever.

17. The device of any one of Claims 11 to 16 wherein the frame (16) is secured to a base (18).

18. The device of any one of Claims 11 to 17 wherein the frame (16) includes at least one rail (28) for guiding lateral translation of the carnage (14).

19. The device of Claim 18 wherein the carriage (14) includes a slide translatably secured on each rail (28).

20. The device of any one of Claims 11 to 19 including at least one drive slide (130) to which translating force is provided, and at least a drive rail (30) to which the drive slide is translatably secured.

21. The device of any one of Claims 11 to 20 wherein the head (136) includes a signal generator (144) for generating mechanical oscillation and an amplifier (140) in communication with the signal generator (144), wherein the signal generator (144) and the amplifier (140) provide mechanical oscillation to the blade (54).

22. The apparatus of Claim 1 wherein an anvil (36) is positioned to constrain and support said food product during formation of transverse cuts, said anvil (36) having a groove (50) positioned above the gap between the first and second conveyors (40) through which portion of said blade (54) travels.

23. The apparatus of claim 22 wherein the anvil (36) includes a first set of rotatable members (64) above the first conveyor (40) and a second set of rotatable members (64) disposed above the second conveyor (40), the rotatable members (64) having axes for rotation generally perpendicular to the direction of movement of the food product, each of the set of rotatable members (64) being positioned to guide lateral edges of the food product as the food product is being moved past the anvil (36).

## Patentansprüche

1. Ultraschallschneidgerät (10) mit
einem Förderaggregat (32) zum Unterstützen eines Nahrungsmittelprodukts und zum Transportieren des Nahrungsmittelprodukts in einer Beförderungsrichtung, wobei das Förderaggregat erste und zweite Förderer hat, die in Reihe mit einem Spalt dazwischen angeordnet sind,
einem Messer (54), das auf seinen entgegengesetzten Stirnseiten erste und zweite abwärts konvergente Schneidränder (102,106) hat,
Einrichtungen (138) zur Ultraschallschwingung des Messers (54) und
einem das Messer tragenden, hin und her gehenden Kopf (136), der geradlinig und quer beweglich ist, um bei Bewegung in einer ersten Querrichtung durch den ersten Schneidrand (102,106) und bei Bewegung in einer zweiten Querrichtung durch den zweiten Schneidrand (102,106) Schnittbildung in dem Nahrungsmittelprodukt zu bewirken, wobei der hin und her gehende Kopf das Messer in dem Spalt zwischen dem ersten und zweiten Förderer des Förderaggregats positioniert, wenn in dem Nahrungswittelprodukt Schnittbildung erfolgt.

2. Gerät des Anspruchs 1, bei dem das Förderaggregat (32) einen zwischen den Förderern angeordneten Amboß aufweist, um das Nahrungsmittelprodukt während der Bildung der Querschnitte zusammen zu pressen und zu unterstützen, wobei der Amboß (36) eine Vertiefung (50) hat, durch die sich ein Teil des Messers (54) bewegt.

3. Gerät des Anspruchs 1 oder 2, bei dem das Messer (54) mit einer Frequenz von etwa 20.000 Hz schwingt.

4. Gerät nach einem der Ansprüche 1 bis 3, bei dem sich der erste Schneidrand (102,106) und der zweite Rand (102,106) schneiden, um eine Spitze (104) zu bilden.

5. Gerät des Anspruchs 4, bei dem die Spitze (104) einen horizontalen Rand hat.

6. Gerät des Anspruchs 5, bei dem jeder der Schneidränder (102,106) geneigt ist und den horizontalen Rand der Spitze unter einem stumpfen Winkel schneidet.

7. Gerät des Anspruchs 5 oder 6, bei dem die Schnittwinkel zwischen den Schneidrändern (102,106) und dem horizontalen Rand der Spitze (104) im wesentlichen identisch sind.

8. Gerät eines der Ansprüche 1 bis 7, bei dem die Schneidränder (102,106) einen Einschlußwinkel von mehr als 60 Grad und weniger als 90 Grad begrenzen.

9. Gerät des Anspruchs 8, bei dem der Einschlußwinkel etwa 60 Grad beträgt.

10. Gerät eines der Ansprüche 1 bis 9, bei dem das Messer (54) eine lineare Translationsgeschwindigkeit von wenigstens etwa 76,2 cm (30 Zoll) je Sekunde hat und wenigstens etwa 150 Schnitte je Minute macht.

11. Gerät zum Schneiden eines Nahrungsmittelprodukts mit
einem einem Ultraschallschneidgerät des Anspruchs 1,
einem relativ zu dem Förderer (32) an einem festen Ort angeordneten Rahmen (16),
einem an dem Rahmen (16) verschiebbar angebrachten und in einer Querrichtung zu der Bewegungsrichtung des Nahrungsmittelprodukts beweglichen Schlitten, wobei der Schlitten (14)
das Messer (54) und
den hin und her gehenden Kopf (136) enthält, an dem das Messer (54) angebracht ist und der dem Messer (54) mechanische Ultraschallschwingungen verleiht, wobei das Messer einen ersten Schneidrand und einen zweiten Schneidrand hat, das Messer (54) in einer ersten Richtung quer durch das Nahrungsmittelprodukt und teilweise in den Spalt zwischen dem ersten und zweiten Förderer fährt und **dadurch** mit dem ersten Schneidrand (102,106) in dem Nahrungsmittelprodukt einen ersten Schnitt macht, und das Messer (54) in einer der ersten Richtung entgegengesetzten zweiten Richtung quer durch das Nahrungsmittelprodukt und teilweise in den Spalt zwischen dem ersten und zweiten Förderer fährt und **dadurch** mit dem zweiten Schneidrand (102,106) in dem Nahrungsmittelprodukt einen zweiten Schnitt macht.

12. Gerät des Anspruchs 11, bei dem der Förderer (32) durch einen Spalt getrennte Fördererabschnitte (40) hat und bei dem das Gerät ferner einen die Fördererabschnitte (40) verbindenden Amboß (36) aufweist.

13. Gerät des Anspruchs 12, bei dem das Nahrungsmittelprodukt bei seiner Verschiebung durch den Förderer (32) den Amboß (36) passiert und bei dem der Amboß (36) Rückhaltearmaturen (62) zur Einschränkung der Bewegung des Nahrungsmittelprodukts in anderen Richtungen als der Eingaberichtung enthält.

14. Gerät des Anspruchs 13, bei dem die Rückhaltearmaturen (62) Drehelemente (64) mit Linienkontakt mit dem Nahrungsmittelprodukt sind.

15. Gerät eines der Ansprüche 12 bis 14, bei dem der Amboß (36) einen Kanal (50) enthält, der es einer unteren Spitze (104) des Messers erlaubt, durch den Kanal (50) und unter eine Bodenfläche des Nahrungsmittelprodukts zu fahren.

16. Gerät eines der Ansprüche 11 bis 15, bei dem der Rahmen (16) ein im wesentlichen starrer Ausleger ist.

17. Gerät eines der Ansprüche 11 bis 16, bei dem der Rahmen (16) an einer Basis (18) befestigt ist.

18. Gerät eines der Ansprüche 11 bis 17, bei dem der Rahmen (16) wenigstens eine Schiene (28) zur Führung der Querverschiebung des Schlittens (14) enthält.

19. Gerät des Anspruchs 18, bei dem der Schlitten (14) einen auf jeder Schiene (28) verschiebbar angebrachten Läufer enthält.

20. Gerät eines der Ansprüche 11 bis 19 mit wenigstens einem Antriebsläufer (130), auf den Verschiebekraft ausgeübt wird, und wenigstens einer Antriebsschiene (30), auf der der Antriebsläufer verschiebbar angebracht ist.

21. Gerät eines der Ansprüche 11 bis 20, bei dem der Kopf (136) einen Signalgenerator (144) zur Erzeugung mechanischer Schwingungen und einen Verstärker (140) in Verbindung mit dem Signalgenerator (144) enthält, wobei der Signalgenerator (144) und der Verstärker (140) das Messer (54) mit mechanischen Schwingungen versorgen.

22. Gerät des Anspruchs 1, bei dem zum Zusammenpressen und Unterstützen des Nahrungsmittelprodukts während der Bildung der Querschnitte ein Amboß (36) angeordnet ist, der eine Vertiefung (50) hat, die über dem Spalt zwischen dem ersten und zweiten Förderer (40) angeordnet ist, durch den ein Teil des Messers (54) fährt.

23. Gerät des Anspruchs 22, bei dem der Amboß (36) über dem ersten Förderer (40) einen ersten Satz Drehelemente (64) und über dem zweiten Förderer (40) einen zweiten Satz Drehelemente (64) hat, wobei die Drehelemente (64) zu der Bewegungsrichtung des Nahrungsmittelprodukts im wesentlichen senkrechte Drehachsen haben und jeder Satz der Drehelemente (64) zur Führung der Seitenränder des Nahrungsmittelprodukts eingerichtet ist, wenn das Nahrungsmittelprodukt an dem Amboß (36) vorbei bewegt wird.

## Revendications

1. Appareil de coupe par ultrasons (10) comprenant :
un ensemble transporteur (32) pour supporter un produit alimentaire et à transporter le produit alimentaire vers l'avant ; ledit ensemble transporteur possédant des premier et deuxième transporteurs disposés en série avec un espace entre eux ;
une lame (54) possédant des premier et deuxième bords (102, 106) coupants convergeant vers le bas sur des extrémités opposées de celle-ci ;
un moyen (138) pour faire osciller ladite lame (54) par ultrasons ; et
une tête (136) à mouvement alternatif supportant ladite lame, ladite tête (136) à mouvement alternatif étant mobile de façon rectiligne et transversale pour effectuer la formation de coupes dans ledit produit alimentaire par ledit premier bord coupant (102, 106) lors d'un déplacement dans une première direction transversale et par ledit deuxième bord coupant (102, 106) lors d'un déplacement dans une deuxième direction transversale, ladite tête à mouvement alternatif positionnant ladite lame dans ledit espace situé entre lesdits premier et deuxième transporteurs dudit ensemble transporteur lors de la réalisation d'une formation de coupes dans ledit produit alimentaire.

2. Appareil selon la revendication 1, dans lequel ledit ensemble transporteur (32) comprend une enclume disposée entre lesdits transporteurs pour contraindre et supporter ledit produit alimentaire pendant la formation des coupes transversales, ladite enclume (36) comportant une rainure (50) à travers laquelle une partie de ladite lame (54) se déplace.

3. Appareil selon la revendication 1 ou 2, dans lequel la lame (54) oscille à une fréquence d'approximativement 20 000 Hz.

4. Appareil selon l'une quelconque des revendications 1 à 3, dans lequel ledit premier bord coupant (102, 106) et le deuxième bord (102, 106) se croisent pour former une pointe (104).

5. Appareil selon la revendication 4, dans lequel la pointe (104) possède un bord horizontal.

6. Appareil selon la revendication 5, dans lequel chacun des bords coupants (102, 106) est incliné et croise le bord horizontal de la pointe selon un angle obtus.

7. Appareil selon la revendication 5 ou 6, dans lequel les angles d'intersection entre les bords coupants (102, 106) et le bord horizontal de la pointe (104) sont sensiblement identiques.

8. Appareil selon l'une quelconque des revendications 1 à 7, dans lequel les bords coupants (102, 106) définissent un angle inclus supérieur à 60 degrés et inférieur à 90 degrés.

9. Appareil selon la revendication 8, dans lequel ledit angle inclus est d'environ 60 degrés.

10. Appareil selon l'une quelconque des revendications 1 à 9, dans lequel la lame (54) a une vitesse de translation linéaire d'au moins environ 76,2 cm (trente pouces) par seconde et effectue au moins environ 150 coupes par minute.

11. Dispositif destiné à couper un produit alimentaire comprenant :
l'appareil de coupe par ultrasons selon la revendication 1 ;
un cadre (16) disposé dans un emplacement fixe par rapport au transporteur (32);
un chariot (14) fixé au cadre (16) de manière à pouvoir se déplacer et mobile dans une direction transversale à la direction de déplacement du produit alimentaire, le chariot (14) comprenant :
la lame (54) ; et
la tête à mouvement alternatif (136) munie de la lame (54) montée sur celle-ci, la tête (136) envoyant une vibration mécanique par ultrasons à la lame (54), dans lequel la lame possède un premier bord coupant et un deuxième bord coupant, la lame (54) se déplace de manière transversale à travers le produit alimentaire et partiellement dans l'espace entre les premier et deuxième transporteurs dans une première direction, effectuant ainsi une première coupe dans le produit alimentaire avec le premier bord coupant (102, 106), et la lame (54) se déplace de manière transversale à travers le produit alimentaire et partiellement dans l'espace entre les premier et deuxième convoyeurs dans une deuxième direction opposée à la première direction, effectuant ainsi une deuxième coupe dans le produit alimentaire avec le deuxième bord coupant (102,106).

12. Dispositif selon la revendication 11, dans lequel le transporteur (32) comprend des sections de transporteur (40) séparées par un espace, et dans lequel le dispositif comprend en outre une enclume (36) joignant les sections de transporteur (40).

13. Dispositif selon la revendication 12, dans lequel le produit alimentaire passe l'enclume (36) quand le produit alimentaire est déplacé par le transporteur (32), et dans lequel l'enclume (36) comprend des fixations de retenue (62) pour contraindre le déplacement du produit alimentaire dans des directions autres que la direction d'entrée.

14. Dispositif selon la revendication 13, dans lequel les fixations de retenue (62) sont des éléments rotatifs (64) ayant un contact linéaire avec le produit alimentaire.

15. Dispositif selon l'une quelconque des revendications 12 à 14, dans lequel l'enclume (36) comprend un canal (50) permettant à une pointe inférieure (104) de la lame de passer à travers le canal (50) et de passer sous une surface inférieure du produit alimentaire.

16. Dispositif selon l'une quelconque des revendications 11 à 15, dans lequel le cadre (16) est un porte-à-faux sensiblement rigide.

17. Dispositif selon l'une quelconque des revendications 11 à 16, dans lequel le cadre (16) est fixé à une base (18).

18. Dispositif selon l'une quelconque des revendications 11 à 17, dans lequel le cadre (16) comprend au moins un rail (28) pour guider la translation latérale du chariot (14).

19. Dispositif selon la revendication 18, dans lequel le chariot (14) comprend un curseur fixé sur chaque rail (28) de manière à pouvoir se déplacer.

20. Dispositif selon l'une quelconque des revendications 11 à 19, comprenant au moins un curseur de commande (130) auquel une force de translation est appliquée, et au moins un rail de commande (30) sur lequel le curseur de commande est fixé de manière à pouvoir se déplacer.

21. Dispositif selon l'une quelconque des revendications 11 à 20, dans lequel la tête (136) comprend un générateur de signal (144) pour générer une oscillation mécanique et un amplificateur (140) en liaison avec le générateur de signal (144), dans lequel le générateur de signal (144) et l'amplificateur (140) délivrent une oscillation mécanique à la lame (54).

22. Appareil selon la revendication 1, dans lequel une enclume (36) est positionnée pour contraindre et supporter ledit produit alimentaire pendant la formation de coupes transversales, ladite enclume (36) possédant une rainure (50) positionnée au-dessus de l'espace entre les premier et deuxième transporteurs (40) à travers laquelle se déplace une partie de ladite lame (54).

23. Appareil selon la revendication 22, dans lequel l'enclume (36) comprend un premier ensemble d'éléments rotatifs (64) au-dessus du premier convoyeur (40) et un deuxième ensemble d'éléments rotatifs (64) disposé au-dessus du deuxième convoyeur (40), les éléments rotatifs (64) ayant des axes pour une rotation généralement perpendiculaire à la direction de déplacement du produit alimentaire, chacun des ensembles d'éléments rotatifs (64) étant positionné pour guider les bords latéraux du produit alimentaire lorsque le produit alimentaire est déplacé après l'enclume (36).
